Europäisches Patentamt

European Patent Office

Office européen des brevets

(19)

(11) Publication number: **0 128 767 B1**

# EUROPEAN PATENT SPECIFICATION

(12)

(45) Date of publication of patent specification: **27.02.91**  (51) Int. Cl.⁵: **G05B 19/18, G05B 19/41**

(21) Application number: **84303933.0**

(22) Date of filing: **11.06.84**

(54) **Numerically controlled machine system.**

(30) Priority: **10.06.83 JP 103812/83**
**10.06.83 JP 103813/83**
**10.06.83 JP 103814/83**

(43) Date of publication of application:
**19.12.84 Bulletin 84/51**

(45) Publication of the grant of the patent:
**27.02.91 Bulletin 91/09**

(84) Designated Contracting States:
**DE FR GB**

(56) References cited:
**US-A- 3 347 457**
**US-A- 3 591 781**
**US-A- 3 591 782**
**US-A- 3 715 644**

(73) Proprietor: **NEC CORPORATION**
**7-1, Shiba 5-chome Minato-ku**
**Tokyo 108-01(JP)**

(72) Inventor: **Muramatsu, Yasuo**
**c/o NEC Corporation 7-1 Shiba 5-chome**
**Minato-ku Tokyo 108-01(JP)**
Inventor: **Okamoto, Kiyokazu**
**c/o NEC Corporation 7-1 Shiba 5-chome**
**Minato-ku Tokyo 108-01(JP)**
Inventor: **Okano, Akihiko**
**c/o NEC Corporation 7-1 Shiba 5-chome**
**Minato-ku Tokyo 108-01(JP)**
Inventor: **Shishido, Kenji**
**c/o NEC Corporation 7-1 Shiba 5-chome**
**Minato-ku Tokyo 108-01(JP)**

(74) Representative: **Orchard, Oliver John**
**JOHN ORCHARD & CO. Staple Inn Buildings**
**North High Holborn**
**London WC1V 7PZ(GB)**

## Description

BACKGROUND OF THE INVENTION

The present invention relates to a numerically controlled machine apparatus and, more particularly, to a numerically controlled machine system in which two independent numerically controlled apparatuses are combined to effect a desired motion.

Nowadays, a numerically controlled machine system is widely used as a machine tools. In a numerically controlled machine apparatus having a multiplicity of controllable axes, four or more axes (X-axis, Y-axis, Z-axis, Θ-axis etc.), it is easy to cut a desired pattern, e.g., a groove with a desired shape, on a cylindrical surface (workpiece). In a numerically controlled machine apparatus which does not have a rotating control for a work table, i.e., the Θ-axis, however, it is a general practice for cutting a desired pattern on the cylindrical workpiece to combine another numerically controlled machine apparatus which controls the Θ-axis. In such case, it is necessary to synchronously operate the two numerically controlled machine apparatuses. In such synchronous operation, a start signal is delivered from one numerically controlled machine apparatus (main apparatus) to the other numerically controlled machine apparatus (auxiliary apparatus) so as to effect a synchronous operation in the two machine apparatuses. In this case, the main apparatus actuates its associated servo mechanism according to a previously programmed sequence after delivering the start signal, while the auxiliary apparatus also actuates its associated servo mechanism according to a previously programmed sequence after receiving the start signal. In the transmission of the start signal, however, it is not possible to obtain an accurate synchronism due to transmission lags in hardware and/or software data-processing. Further, since there is a difference in data calculation speed between the two numerically controlled apparatuses, it is not possible to effect a synchronous operation in the strict sense, and hence, the desired effect cannot be obtained.

Moreover, when a complicated space curve, such as a quadratic curve, is to be drawn by combining the motions of two numerically controlled machine apparatuses, the space curve cannot be drawn smoothly, since movement commands to the apparatuses are generally divided by segments. If the divided segments are further divided into finer segments in order to obtain a smooth locus, the command data become massive in amount, and consequently, it is exceedingly troublesome to prepare the command data.

SUMMARY OF THE INVENTION

Accordingly, it is an object of the invention to provide a numerically controlled machine system in which two independent numerically controlled machine apparatuses are employed to combine their motions and which permits complete synchronous motions and makes it possible to realize a smooth motion.

It is another object of the invention to provide a numerically controlled machine system which makes it possible to draw identical motion loci or similar motion loci on cylindrical workpieces.

The present invention is defined in claim 1.

BRIEF DESCRIPTION OF THE DRAWINGS

Fig. 1 is a block diagram showing the conventional numerically controlled system in which two numerically controlled apparatuses are combined;

Fig. 2 shows a straight locus in a cylindrical workpiece worked by the conventional system shown in Fig. 1;

Fig. 3 shows a circular arc locus in a cylindrical workpiece worked by the conventional system shown in Fig. 1;

Fig. 4 is a block diagram of an embodiment of the present invention;

Fig. 5 shows a straight locus in a cylindrical workpiece worked by the embodiment of the present invention shown in Fig. 4;

Fig. 6 shows a circular arc locus in a cylindrical workpiece worked by the embodiment shown in Fig. 4;

Fig. 7 is a flow chart showing processings effected by a biaxial interpolator shown in Fig. 4;

Fig. 8 is a function block diagram for generating two-phase pulse signals for a hand mode input of a numerically controlled apparatus;

Figs. 9 and 10 show waveforms, which correspond to a normal moving direction and a reverse moving direction, of the two-phase pulse signals generated in Fig. 8;

Fig. 11 is an illustration for realizing a identical locus on cylindrical surfaces respectively having radii r and r' , which are different from each other;

Fig. 12 is an illustration of a method for realizing similar loci; and

Figs. 13 and 14 are illustrations showing examples in which similar loci are obtained on respective cylindrical surfaces different and those equal in a workpiece radius r , respectively.

DESCRIPTION OF THE PRIOR ART STATEMENT

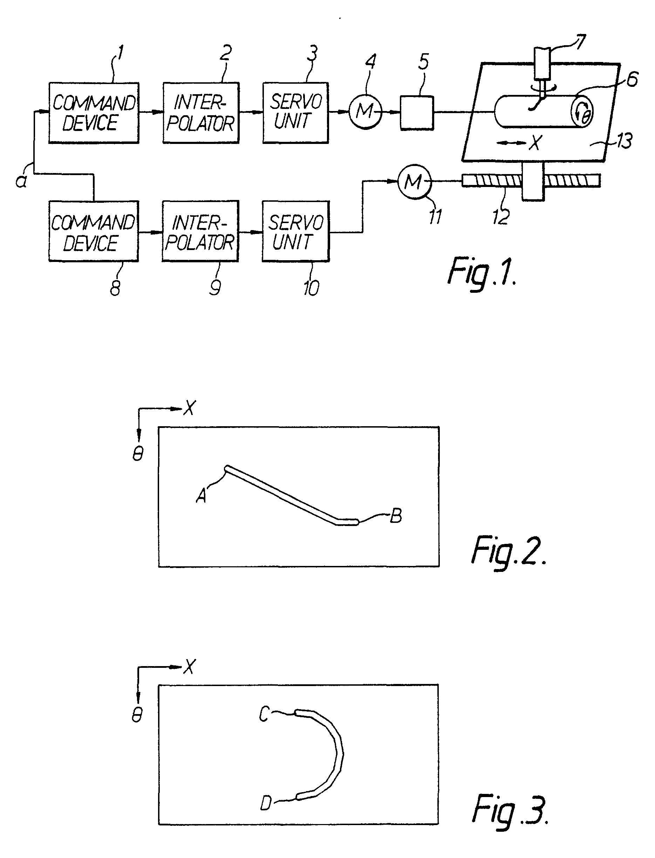

First of all, in order to facilitate the understanding of the invention, a conventional numerically controlled machine system for making a worked locus in/on a cylindrical workpiece will be described hereinafter. Referring first to Fig. 1, a command device 1 transmits a pre-programed command to a uniaxial interpolator 2 which generates a time-series pulse train, for example, in accordance with the pre-programed command. A servo unit 3 drives a motor 4 in accordance with the time-series pulse train delivered from the uniaxial interpolator 2. The rotation derived from the motor 4 is transmitted through a speed reduction mechanism 5 to a cylindrical workpiece 6. A cutting tool 7 is provided onto the workpiece 6. While, another command device 8 transmits a pre-programed command to an interpolator 9. A servo unit 10 drives a motor 11 in accordance time-series pulse trains delivered from the interpolator 9. The motor 11 rotates a screw shaft 12 to shift a table 13 in a direction x. In Fig. 1, the command device 8, the interpolator 9, the servo unit 10 and motor 11 constitute the main numerically controlled (NC) apparatus, while the command device 1, the uniaxial interpolator 2, the servo unit 3, the motor 4 and the speed reduction mechanism 5 consitute the auxiliary NC apparatus.

In Fig. 1, the workpiece 6 is rotated in either direction according to the rotation of the motor 4. The axis of rotation of the workpiece 6 driven by the auxiliary NC apparatus will be referred to as "Θ-axis", and the coordinate axis representing the direction of movement of the work table 13 will be referred to as "X-axis", hereinafter. Referring now to Fig. 2, when a straight worked locus is to be drawn in the cylindrical surface 6 from a starting point A to an end point B, a command corresponding to the X-axis component of the straight locus and a command corresponding to the Θ-axis component of it are previously fed into the main NC apparatus and the auxiliary NC apparatus, respectively. Then, the main NC apparatus delivers a start signal a to the auxiliary NC apparatus and simultaneously starts its own movement. Upon the reception of the start signal a , the auxiliary NC apparatus also starts its movement. In order to obtain coincidence in moving timing of both the axes at each of the starting and end points A and B of the straight locus, the respective moving speed with respect to each axis is previously calculated and pre-set to both the NC apparatuses. In the conventional system, however, since the moving timings with respect to both the axes are not coincident with each other because of the reason described above, therefore, the end timings of both the axes do not coincide with each other. As a result, the line between the points A and B is not straight but undesirably bent as shown in Fig. 2. Referring now to Fig. 3, when a circular arc locus is to be drawn on the cylindrical workpiece from a starting point C to an end point D, the main NC apparatus is previously fed with movement commands corresponding to respective finely divided segments in the X-axis. Similarly to the case of the above-described straight locus, the main and auxiliary NC apparatuses substantially simultaneously start their respective movements. As shown in Fig. 3, the circular arc locus contains angular portions at each joint point between adjacent segments. The each angular portion in the circular arc locus is derived due to the same reason as Fig. 2.

DESCRIPTION OF THE PREFERRED EMBODIMENT

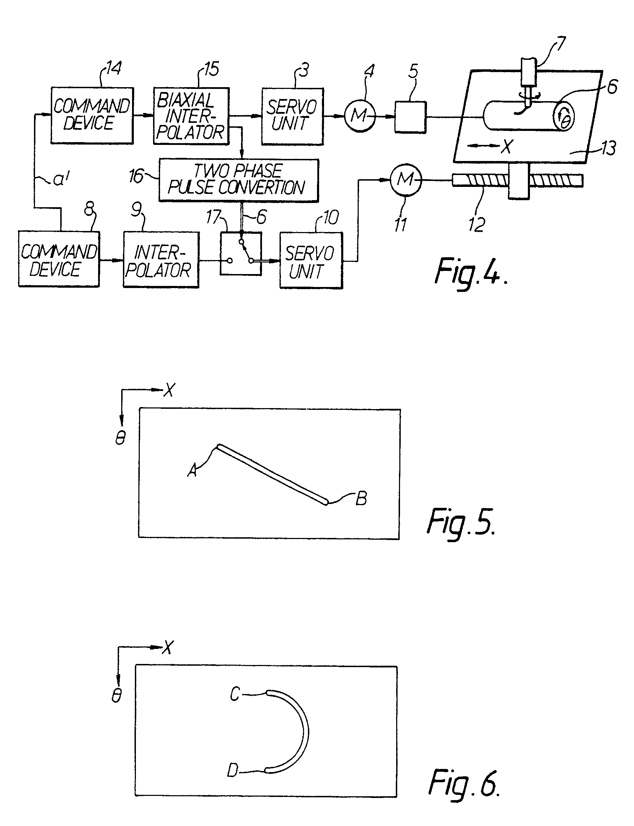

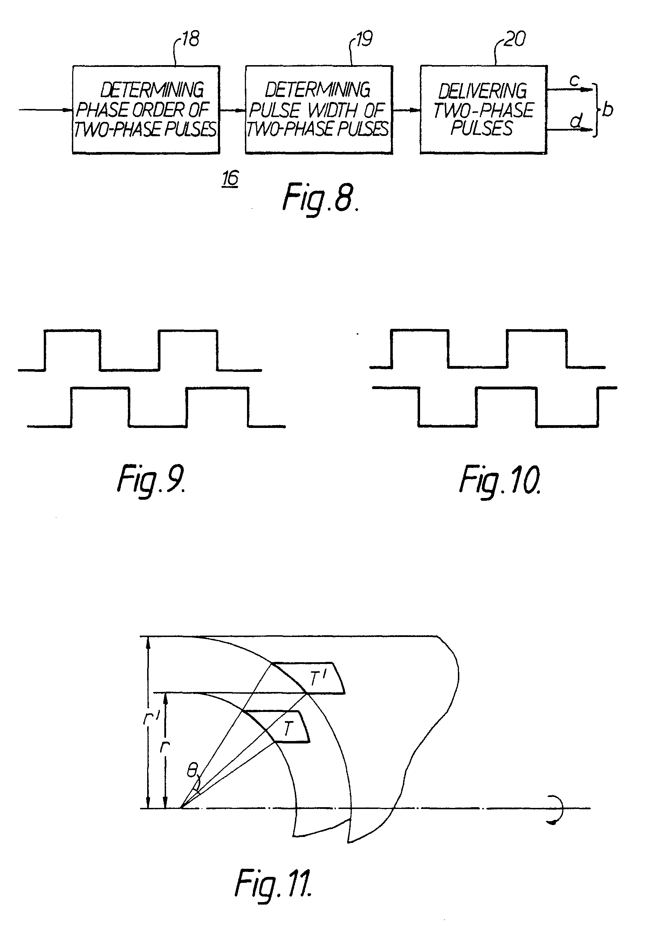

In Fig. 4 showing an embodiment of the present invention, a biaxial interpolator 15 generates two time-series pulse trains, which correspond to the Θ-axis and the X-axis, in accordance with commands . Then, one of the time-series pulse trains corresponding to the X-axis is supplied to a two-phase pulse converter 16. In the two-phase pulse converter 16, the time-series pulse train corresponding to the X-axis is converted into two pulse trains 6 having a phase difference of 90°, therebetween, as shown in Figs. 8 and 9. The two pulse trains b delivered from the two-phase pulse converter 16 are supplied through a selector 17 to a hand mode input terminal of a servo unit 10. Generally, any numerically controlled machine apparatus has such hand mode input terminal in order to be operative by a temporary hand mode pulse input, which consists of two-phase pulses. In this embodiment, two calculations for the Θ-axis and the X-axis are completely synchronized with each other because they are performed in the biaxial interpolator 15, together. Furthermore, actual synchronism between the X-axis movement and the Θ-axis movement is completed by supplying the interpolated time-series pulse train from the auxiliary NC apparatus to the main NC apparatus, i.e., the servo unit 10. To this end, the two-phase pulse converter 16 are provided between the biaxial interpolator 15 and the servo unit 10 in order to convert the interpolated time-series pulse train into two-phase pulse trains b applicable to the hand mode operation of the main NC apparatus. Referring to Fig. 5, when a straight worked locus is to be drawn on a cylindrical surface 6 from a starting point A to an end point B, the main NC apparatus is previously fed with both a command to change over the selector 17 as shown in Fig. 4 and a command to generate a start signal a' which induces the starting of the auxiliary NC apparatus. On the other hand, the auxiliary NC apparatus is previously fed with such a linear interpolation biaxial command as allowing the straight worked locus to be drawn on the cylindrical surface 6. Accordingly, a command device 14 has been made free from the troublesomeness in the conventional system, i.e., the command devices 1 and 8 (Fig. 1) respectively give movement commands to the main and auxiliary NC apparatuses to calculate their respective servo speeds. Upon receipt of the start signal a' , in the auxiliary NC apparatus, the biaxial interpolator 15 delivers the time-series pulse train corresponding to the Θ-axis to a servo unit 3. At the same time, the biaxial interpolator 15 delivers the time-series pulse train corresponding to the X-axis, which is converted into two-phase pulses having a phase difference of 90° for the hand mode in the main NC apparatus. Since the present invention allows the motions along both the Θ-axis and the X-axis to be effected in complete synchronism with each other, it is possible to draw the desired straight worked locus as shown in Fig. 5 without any bend or other undesirable angular portion.

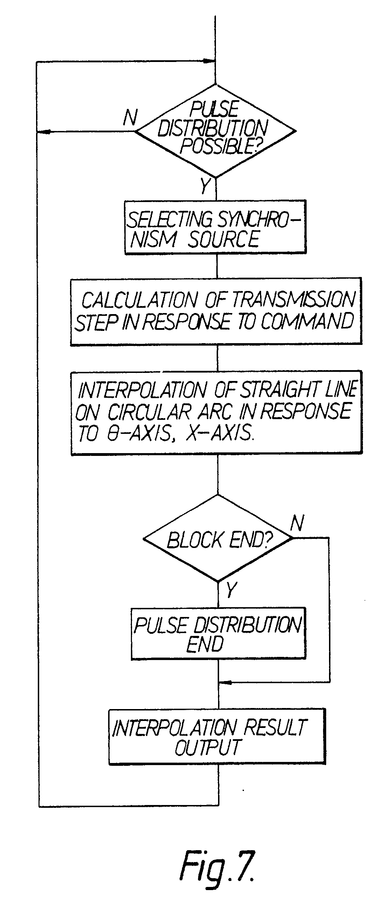

Next, when a circular arc worked locus is to be drawn on the cylindrical surface 6 as shown in Fig. 6, the main NC apparatus does not receive any command, but the command device 14 of the auxiliary NC apparatus is previously fed with a circular biaxial interpolation command so as to draw a circular arc worked locus in the cylindrical surface 6. At the time of starting, the selector 17 is switched over so as to be ready for feeding of the two-phase pulse signal b . Then, the start signal a' is delivered to the auxiliary NC apparatus. Upon receipt of the start signal a', the biaxial interpolator 15 delivers the time-series pulse train corresponding to the Θ-axis to the servo unit 3. At the same time, the time-series pulse train corresponding to the X-axis is fed to the two-phase pulse converter 16 so as to be converted into two-phase pulses having a phase difference of 90° for the hand mode. The two-phase pulses are supplied to the servo unit 10 through the switch selector 17. According to the invention, the combination of the motions along both the X-axis and Θ-axis makes it possible to draw a desired circular arc worked locus as shown in Fig. 6. A process flow in the biaxial interpolator 15 is indicated in Fig. 7. Unlike the conventional system in which a segmental approximation is performed, this system, in which a circular interpolation calculation is carried out, makes it possible to draw the smooth locus.

Referring to Fig. 8 showing a schematical function block of the two-phase pulse converter 16, a phase order determining block 18 determines a phase order between two-phase pulses c and d under the reciption of the time series pulse train from the biaxial interpolator 15. Further, a block 19 determines the pulse width of two-phase pulses c and d, and a block 20 delivers the two-phase pulses c and d as shown in Fig. 9 and 10. The two-phase pulses c and d have a phase difference of about 90° , therebetween. The phase relation between the two-phase pulses c and d corresponds to a moving direction of the X-axis. Therefore, Fig. 9 corresponds to the normal moving direction of the X-axis and Fig. 10 corresponds to the reverse moving direction. Such two-phase pulses c and d are supplied to the main NC apparatus, in which the hand mode is selected.

Next, a modification, which enables the embodiment of the present invention to make an identical worked locus in cylindrical workpieces having different radii, will be described, hereinafter. In Fig. 11 showing worked loci in different cylindrical workpieces, when the radius of the workpiece is represented by r, the movement amount is indicated by r x Θ in accordance with the rotation Θ of the Θ-axis. Therefore, even if the same rotation command Θ of the Θ-axis is given, the movement amount is varied to r' x Θ in accordance with the radius r' of the cylindrical workpiece. In consequence, loci T and T' on respective cylindrical workpieces are not equal even if the commands of the X-axis and the Θ-axis are equal. To overcome such disadvantage, according to the present invention, a reference value r corresponding to a certain reference workpiece is employed. When a radius of an actual workpiece is measured as r', the radius data r and r' is applied into the biaxial interpolator 15, wherein an actual rotation value Θ' in calculated as $\Theta' = \Theta \times \frac{r}{r'}$ (equation (1)) and the rotation value Θ' is applied as the Θ-axis movement in the step 202 of Fig. 7, instead of Θ. According to the modification of the present invention, the same worked locus is obtained even if the radius of the cylindrical workpiece is varied. It is to be noted that the equation (1) is a mere proportional expression and, therefore, the actual rotation value Θ' can be easily calculated by employing r and r' or r/r' with respect to Θ, in the biaxial interpolator 15. Consequently, it is possible to obtain identical worked loci, such as a straight line or a quadratic curve, on the cylindrical workpieces each having a different redius.

4

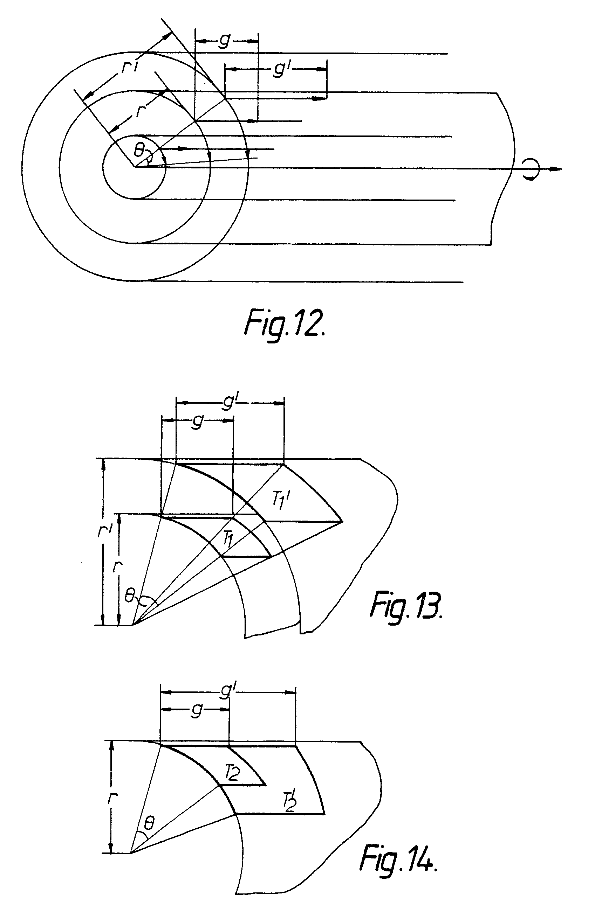

Then, a modification, which enables the embodiment of the present invention to make a similar locus such as a straight line or a quadratic curve in cylindrical workpiece having different radii, will be explained, hereinafter. In Fig. 12 showing worked loci in the different cylindrical workpiece, a movement amount g' is processed in accordance with a radius r as follows:

$$g' = g \times \frac{r'}{r} \qquad \qquad \dots \quad (2)$$

As a result, a similar worked locus is realized in the respective cylindrical workpiece corresponding to the above-mentioned radius. The reason for this is described. The rotational movement amount f on each cylindrical surface is represented by an equation (3) in accordance with the rotation angle $\Theta$.

$$\left. \begin{array}{l} f = 2\pi r \times \dfrac{\Theta}{360} \\[2mm] f' = 2\pi r' \times \dfrac{\Theta}{360} \end{array} \right\} \qquad \qquad \dots \quad (3)$$

Therefore, the following equation (4) is derived.

$$f' = f \times \frac{r'}{r} \qquad \qquad \dots \quad (4)$$

In the embodiment of Fig. 4, without the modification the rotational movement amount on the each cylindrical surface is r x $\Theta$, which is varied in proportion to the radius r. In this case, however, the worked loci on the respective cylindrical surface are not similar in accordance with the radius r because the movement value along the X-axis is not varied, when the same commands $\Theta$ and X are given. To overcome such disadvantage, according to the modification of the invention, a reference radius r of a certain cylindrical workpiece is employed and when the radius of an actual workpiece concerned is r', $g' = g \times \frac{r'}{r}$ is calculated by employing r and r' or r'/r . Then, the calculated value g' is given as the X-axis movement in the step 202 of Fig. 7, instead of g. As a result, the relationship $\Theta \times r \times g = K (\Theta \times r' \times g')$ is derived (K: a constant). Accordingly, the loci on the respective cylindrical surfaces are constantly similar to each other even if there is any change in radius r of the workpiece. It is to be noted that the equation (2) is a mere proportional expression, and therefore, the actual movement value g' can be easily obtained by employing r and r' or r'/r with respect to g , in the biaxial interpolator 15. Thus, it is possible to realize the similar loci on the respective cylindrical surfaces under the reception of the same rotation angle command and the above-mentioned straight movement.

Examples to draw similar loci on cylindrical workpieces will be shown hereinafter. Referring to Fig. 13, it is assumed that the locus $T_1$ on the cylindrical surface is realized by programing a rotation angle command value $\Theta$ and a movement comand value d of the X-axis with respect to the radius command value r. A similar locus $T_1'$ is obtained on the cylindrical surface having a radius r' in response to the compensation of the equation (2) without varying the program. Furthermore, as shown in Fig. 14, when a locus $T_2'$ similar to a locus $T_2$ is drawn on an identical cylindrical surface having the radius r, the radius command value r is revised to r'. In this case, then, the rotation angle value $\Theta'$ and the movement value g' are obtained by the compensations of the equations (2) and (4), respectively.

As described above, according to the invention, it is possible to combine independent numerically controlled apparatuses, and a complete synchronized worked locus can be easily realized in a cylindrical workpiece.

## Claims

1. A numerically controlled machine system including a main numerically controlled apparatus (8, 9, 10, 11, 12) for controlling a shift motion of a workpiece in an X-axis and an auxiliary numerically controlled apparatus (1, 2, 3, 4, 5) for controlling a rotational motion of the workpiece in a ϴ-axis, the main numerically controlled apparatus (8, 9, 10, 11, 12) including a command device (8) for receiving a first X-axis command, an X-axis interpolator (9) responsive to the first X-axis command for calculating a first X-axis interpolation to produce a first X-axis control pulse train and a first servo unit (10, 11, 12) for producing the shift motion of the workpiece, the auxiliary numerically controlled apparatus (1, 2, 3, 4, 5) including a second servo unit (3, 4, 5) for producing the rotational motion of the workpiece, characterised in that the auxiliary numerically controlled apparatus (14, 15, 16, 3, 4, 5) includes a command device (14) for receiving a second X-axis command and a ϴ-axis command, a biaxial interpolator (15) coupled to the command device (14) for calculating a second X-axis interpolation and a ϴ-axis interpolation to produce a second X-axis control pulse train and a ϴ-axis control pulse train, respectively, and converter means (16) for converting the second X-axis control pulse train into two-phase pulse trains suitable for a hand mode function, and in that the main numerically controlled apparatus (8, 9, 10, 11, 12) further includes a selecting means (17) for selecting the two-phase pulse trains from the converter means (16) and supplying them to the first servo unit (10, 11, 12) in response to hand mode selection, whereby the first servo unit (10, 11, 12) and the second servo unit (3, 4, 5) operate synchronously in the hand mode.

2. A numerically controlled machine system as claimed in claim 1, characterised in that the biaxial interpolator (15) further includes means for compensating the rotation of the workpiece in accordance with the radius of the workpiece.

3. A numerically controlled machine system as claimed in claim 1, characterised in that the biaxial interpolator (15) further includes means for compensating a shift of the workpiece in accordance with the radius of the workpiece.


**Revendications**

1. Système de machine à commande numérique comprenant un dispositif principal à commande numérique (8, 9, 10, 11, 12) pour commander un mouvement de déplacement d'une pièce suivant un axe x et un dispositif auxiliaire à commande numérique (1, 2, 3, 4, 5) pour commander un mouvement de rotation de la pièce suivant un axe ϴ, le dispositif principal à commande numérique (8, 9, 10, 11, 12) comprenant un dispositif de commande (8) pour recevoir une première commande d'axe x, un interpolateur d'axe x (9) répondant à la première commande d'axe x pour calculer une première interpolation d'axe x pour émettre un premier train d'impulsions de commande de l'axe x et une première servocommande (1C, 11, 12) pour produire le mouvement de déplacement de la pièce, le dispositif auxiliaire à commande numérique (1, 2, 3, 4, 5) comprenant une seconde servocommande (3, 4, 5) pour produire le mouvement de rotation de la pièce, caractérisé en ce que le dispositif auxiliaire de commande numérique (14, 15, 16, 3, 4, 5) comprend un dispositif de commande (14) pour recevoir une seconde commande d'axe x et une commande d'axe ϴ, un interpolateur biaxe (15) relié au dispositif de commande (14) pour calculer une seconde interpolation d'axe x et une interpolation d'axe ϴ pour émettre un second train d'impulsions de commande de l'axe x et un train d'impulsions de commande de l'axe ϴ, respectivement, et un moyen de convertisseur (16) pour convertir le second train d'impulsions de commande de l'axe x en trains d'impulsions à deux phases appropriés à un fonctionnement en mode manuel, et en ce que le dispositif principal à commande numérique (8, 9, 10, 11, 12) comprend en outre un moyen de sélection (17) pour sélectionner les trains d'impulsions à deux phases provenant du moyen de convertisseur (16) et les fournir à la première servocommande (10, 11, 12) en réponse à une sélection en mode manuel, la première servocommande (10, 11, 12) et la seconde servocommande (3, 4, 5) fonctionnant alors de manière synchrone en mode manuel.

2. Système de machine à commande numérique selon la revendication 1, caractérisé en ce que l'interpolateur biaxe (15) comprend en outre un moyen pour compenser la rotation de la pièce en fonction du rayon de la pièce.

3. Système de machine à commande numérique conformément à la revendication 1, caractérisé en ce que l'interpolateur biaxe (15) comprend en outre un moyen pour compenser un déplacement de la pièce en fonction du rayon de la pièce.

**Ansprüche**

1. Numerisch gesteuertes Maschinensystem mit einer numerisch gesteuerten Hauptvorrichtung (8, 9, 10, 11, 12) zum Steuern einer Verschiebungsbewegung eines Werkstücks in einer X-Achse und einer numerisch gesteuerten Hilfsvorrichtung (1, 2, 3, 4, 5) zum Steuern einer Drehbewegung des Werkstückes in einer Θ-Achse, wobei die numerisch gesteuerte Hauptvorrichtung (8, 9, 10, 11, 12) ein Befehlsgerät (8) zum Empfangen eines ersten X-Achsenbefehls, einen X-Achseninterpolator (9), der auf den ersten X-Achsenbefehl anspricht, um eine erste X-Achseninterpolation zu berechnen und eine erste X-Achsensteuerimpulsfolge zu erzeugen, und eine erste Servoeinheit (10, 11, 12) zum Erzeugen der Verschiebungsbewegung des Werkstückes aufweist, wobei die numerisch gesteuerte Hilfsvorrichtung (1, 2, 3, 4, 5) eine zweite Servoeinheit (3, 4, 5) zum Erzeugen der Drehbewegung des Werkstückes aufweist, **dadurch gekennzeichnet,** daß die numerisch gesteuerte Hilfsvorrichtung (14, 15, 16, 3, 4, 5) folgende Bestandteile aufweist: ein Befehlsgerät (14) zum Empfangen eines zweiten X-Achsenbefehls und eines Θ-Achsenbefehls, einen biaxialen Interpolator (15), der mit dem Befehlsgerät (14) gekoppelt ist, um eine zweite X-Achseninterpolation und eine Θ-Achseninterpolation zu berechnen und eine zweite X-Achsensteuerimpulsfolge bzw. eine Θ-Achsensteuerimpulsfolge zu erzeugen, und eine Wandlereinrichtung (16) zum Wandeln der zweiten X-Achsensteuerimpulsfolge in Zweiphasenimpulsfolgen, die für den Handbetrieb geeignet sind, und daß die numerisch gesteuerte Hauptvorrichtung (8, 9, 10, 11, 12) ferner fol-gende Bestandteile aufweist: eine Auswahleinrichtung (17), um die Zweiphasenimpulsfolgen aus der Wandlerein richtung (16) auszuwählen und sie zu der ersten Servoeinheit (10, 11, 12) als Reaktion auf die Handbetriebauswahl zu liefern, wobei die erste Servoeinheit (10, II, 12) und die zweite Servoeinheit (3, 4, 5) im Handbetrieb synchron arbeiten.

2. Numerisch gesteuertes Maschinensystem nach Anspruch 1, **dadurch gekennzeichnet,** daß der biaxiale Interpolator (15) ferner eine Einrichtung zum Kompensieren der Drehung des Werkstücks entsprechend dem Radius des Werkstückes aufweist.

3. Numerisch gesteuertes Maschinensystem nach Anspruch 1, **dadurch gekennzeichnet,** daß der biaxiale Interpolator (15) ferner eine Einrichtung zum Kompensieren einer Verschiebung des Werkstükkes entsprechend dem Radius des Werkstückes aufweist.

Fig.1.

Fig.2.

Fig.3.

Fig.4.

Fig.5.

Fig.6.

Fig.7.

18

**DETERMINING PHASE ORDER OF TWO-PHASE PULSES**

19

**DETERMINING PULSE WIDTH OF TWO-PHASE PULSES**

20

**DELIVERING TWO-PHASE PULSES**

c

d

b

16

**Fig.8.**

**Fig.9.**

**Fig.10.**

$T'$

$T$

$r'$

$r$

$\theta$

**Fig.11.**

Fig.12.

Fig.13.

Fig.14.